# EUROPÄISCHE PATENTSCHRIFT

(11) **EP 1 905 507 B1**
(45) Veröffentlichungstag und Bekanntmachung des Hinweises auf die Patenterteilung: **30.03.2011**
(21) Anmeldenummer: 07018788.5
(22) Anmeldetag: 25.09.2007
(51) Int. Cl.: B01J 2/16, B01J 8/00, B01J 8/24, B01J 8/34, F26B 3/00

(54) **Kombiniertes Produktbehälter-/Filtersystem**
Combined product container/filter system
Système de filtre/récipient de produit combiné

(30) Priorität: 26.09.2006 DE 102006047119
(43) Veröffentlichungstag der Anmeldung: 02.04.2008
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang

(56) Entgegenhaltungen:
- EP-A- 0 227 486
- EP-A- 0 839 572
- GB-A- 2 218 015

## Beschreibung

Die Erfindung betrifft eine Vorrichtung zum Behandeln von partikelförmigem Gut, mit einem Gehäuse, in dem eine Prozesskammer zum Aufnehmen des zu behandelnden Gutes vorhanden ist, die einen Boden aufweist, durch den Prozessluft in die Prozesskammer einführbar ist, und mit einem haubenartigen Gebilde, das sich bis zu einem oberen Endbereich des Gehäuses erstreckt und dort über eine Halterung fixiert ist, wobei das haubenartige Gebilde aus einem flexiblen, textilen Gewebe besteht, das für die Prozessluft durchlässig ist, die zu behandelnden Partikel des Gutes jedoch zurückbehält, und wobei die Prozesskammer im Innenraum des haubenartigen Gebildes ausgebildet ist

Eine Vorrichtung zum Granulieren ist aus der DE 697 26 691 T2 bekannt.

Derartige Vorrichtungen dienen im Allgemeinen dazu, um ein partikelförmiges Gut zu trocknen, zu granulieren oder zu coaten. Ein gasförmiges Medium, sog. Prozessluft, wird über den Boden in die Prozesskammer eingeführt. Ein auf dem Boden aufgenommenes Gut wird durch die Prozessluft verwirbelt und das verwirbelte Gut wird entsprechend behandelt.

Beim Trocknen wird lediglich erwärmte trockene Prozessluft durchgeführt, um Feuchtigkeit, die an den Gutteilchen haftet, abzuführen. Beim Granulieren wird dem Gut eine klebrige Flüssigkeit feinstverteilt aufgesprüht, wodurch mehrere Gutteilchen zu einem Granulatteilchen zusammengefügt werden. Beim Coaten wird einem bereits pellet- oder tablettenförmigen Gut eine Überzugschicht aufgebracht.

Durch den Anmelder und Erfinder wurden zahlreiche derartige Vorrichtungen beschrieben, wobei nur stellvertretend dafür einige aufgeführt werden sollen, beispielsweise die DE 199 04 147 C2, die DE 100 54 557 A1 und die DE 102 48 186 B3, bei denen der Boden aus mehreren übereinandergelegten Leitplatten zusammengesetzt ist. Zwischen den Leitplatten sind Schlitze oder Spalte ausgebildet, über die die Prozessluft mit einer im Wesentlichen horizontalen Bewegungskomponente in die Prozesskammer durch den Boden eingerührt wird. Dadurch bildet sich zwischen der Oberseite des Bodens und dem verwirbelten Gut eine Art Luftpolster aus, auf dem das verwirbelte Gut ruht. Je nach Ausgestaltung des Bodens bildet sich ein toroidal verwirbelter Ring aus, in dem sich die Gutteilchen in einer mehr oder weniger definierten Bahn bewegen. In diesem verwirbelten Gut findet die eigentliche Behandlung statt. Die Prozessluft tritt aus dem verwirbelten Gutkörper aus, strömt an das obere Ende der Prozesskammer und wird über einen entsprechenden Auslass abgeführt. Dabei mitgerissene Gutteilchen werden über am oberen Ende der Prozesskammer angeordnete Filter, meist in Form von abhängenden Filterpatronen, zurückgehalten und durch entsprechende Rückblasvorrichtungen dem Körper an verwirbeltern Gut zurückgeführt.

Dabei ist auch unvermeidbar, dass Gutteilchen an die Innenseite der meist stehend zylindrischen oder konischen Wand des Gehäuses, das die Prozesskammer umgibt, prallen und entweder wieder aufgrund der Schwerkraft nach unten abfallen und dem verwirbelten Gutkörper rückgeführt werden oder mit der Prozessluft weiter in Richtung der Filter mitgerissen werden.

Im praktischen Einsatz dieser Vorrichtungen wurde festgestellt, dass es zu behandeindes Gut gibt, das dazu neigt, sich an der Innenwand der Prozesskammer abzusetzen, daran haften zu bleiben und nach und nach mit anderen Gutteilchen zu einer kompakten inneren Beschichtung der Wand der Prozesskammer zusammenzubacken. Dabei handelt es sich oftmals um extrem feinstäubige Gutteilchen, die zu elektrostatischer Aufladung neigen. Bei großen Anlagen bilden sich zentimeterdicke Schichten an der Innenseite der Wand der Prozesskammer aus, die während einer Prozessführung nur schwierig oder gar nicht zu entfernen sind. Man muss Spachtel oder Hammer heranziehen, um die mehr oder weniger fest anhaftenden Schichten wieder abzulösen.

Dies ist nicht nur nachteilig im Sinne einer Reinigung einer solchen Anlage, sondern auch dahingehend, dass diese verbackten Gutteilchen nicht mehr am Prozessgeschehen teilnehmen und daher auch nicht mehr zur Weiterverarbeitung zur Verfügung stehen. Bei hochwertigen Gutteilchen, insbesondere im Arzneimittelbereich, ist das ein nicht hinnehmbarer Verlust an Ausgangsstoffen, Ein Prozessgeschehen dieser Art ist nicht dazu geeignet, reproduzierbar und automatisiert abzulaufen.

Aus der eingangs genannten DE 697 266 691 T2 ist eine Vorrichtung bekannt, die dieses Phänomen des Anhaftens gezielt ausnutzt, wozu die Prozesskammer in einem haubenartigen Gebilde aus einem flexiblen, textilen Gewebe ausgebildet ist.

Diese Vorrichtung weist ein Gehäuse und einen Boden in Form einer Siebplatte auf, durch den Prozessluft in eine Prozesskammer eingeführt wird, um dadurch das zu behandelnde Gut innerhalb der Prozesskammer zu verwirbeln und zu vermischen. In dem Gehäuse ist das haubenartige Gebilde aus Gewebe angeordnet, in dessen Innenraum die Prozesskammer ausgebildet ist.

Das haubenartige Gebilde, das sich leicht konisch nach oben aufweitet, erstreckt sich von einem über dem Boden der Vorrichtung angeordneten Produktbehälter bis zum oberen Endbereich des Gehäuses und ist dort fixiert, so dass eine Prozesskammer gebildet wird. Das haubenartige Gebilde ist derart ausgebildet, dass es ein Hindurchtreten von Prozessluft gestattet, die zu behandelnden Gutteilchen jedoch zurückbehält. Somit dient es gleichzeitig als Filter und als Wand oder Begrenzung der Prozesskammer. Um die Außenseite der Prozesskammer sind Absaug- bzw. Blasventile angeordnet, die wahlweise oder synchron arbeiten. Im Ansaugmodus soll gezielt eine verbackte Produktschicht an der Innenseite des Gewebes erzeugt werden, die im Abreinigungsmodus abgelöst und zerbrochen wird und die Bruchstücke sollen wieder dem Innenraum zugeführt werden. Dadurch sollen Partikel ausgebildet werden, die aus den abgelösten zerbrochenen Bruchstücken bestehen, an deren Außenseite nach Rückfallen in den Innenraum ursprüngliche Partikel durch weiteres Bindemittel angebunden werden.

Bei der Vorrichtung der vorliegenden Anmeldung soll im Unterschied dazu die Agglomerierung, Beschichtung oder Trocknung möglichst nur im über dem Boden schwebenden verwirbelten Gutring stattfinden, da dadurch ein gleichmäßigeres Ergebnis erzielbar ist. Die Rückführung mitgerissener und von Filtern zurückgehaltener Partikel erfolgt aus ökonomischen Gründen, insbesondere da diese Vorrichtungen im pharmazeutischen Bereich Einsatz finden, wo teure Wirkstoffe behandelt werden.

Daher soll bei der Vorrichtung der vorliegenden Anmeldung ein Anbacken von größeren Gutmengen vermieden und einzelne, von der Prozessluft mitgerissene Partikel ausgefiltert und alsbald dem Behandlungsprozess wieder zurückgeführt werden. Es ist daher Aufgabe der vorliegenden Erfindung, hier Abhilfe zu schaffen und eine Vorrichtung der eingangs genannten Art dahingehend weiterzuentwickeln, dass ohne größeren konstruktiven Aufwand auch zur Anhaftung und zur Verbackung neigendes kritisches Gut mit gutem Ergebnis reproduzierbar behandelt werden kann.

Erfindungsgemäß wird die Aufgabe dadurch gelöst, dass sich das haubenartige Gebilde, ausgehend vom umfänglichen Rand des Bodens und über dem Boden erhebt und zumindest in seinem oberen Bereich mit Faltungen versehen ist.

Durch das Versehen des haubenartiges Gebildes mit Faltungen wird die Oberfläche der Innenwand stark vergrößert. Die ausgänglich feinkörnigen Teilchen, die von der Prozessluft eher mitgerissen werden als schon gebildete größere Agglomerate, werden über die stark vergrößerte Innenwandfläche verteilt zurückgehalten. Schon dadurch ist die Wahrscheinlichkeit, dass auf ein an der Innenseite anhaftendes Teilchen ein weiteres Teilchen trifft und mit diesem verbackt, stark herabgesetzt. Diese Faltungen verlaufen vorzugsweise vertikal.

Ferner hat ein haubenartiges Gebilde, das eine gesamte Begrenzung der Prozesskammer über dem Boden darstellt, die Wirkung, dass auch zur Verbackung neigende Gutteilchen nicht mehr lange anhaften und zu mehr oder weniger festen Schichten verbacken, da diese kontinuierlich abgelöst werden.

Dieses kontinuierliche Ablösen der Gutteilchen kann zum einen dadurch erklärt werden, dass das formflexible textile Gewebe durch die hindurchtretende Prozessluft in eine Art wabernde Bewegung versetzt wird, die einem längeren Anhaften oder Zusammenbacken entgegenwirkt.

Ferner kann das über dem Boden verwirbelte Gut selbst, das eine gewisse rotierende Masse darstellt, das haubenartige Gebilde ebenfalls in eine Art wabernde Bewegung versetzen. In großen Anlagen werden Chargen von mehreren hundert Kilogramm behandelt. Diese verwirbelte Gutmasse trifft oder schlägt aufgrund der Verwirbelung laufend an die Innenseite des flexiblen textilen Gewebes, wodurch am Gewebe anhaftende Gutpartikel alsbald abgelöst werden. Diese Schläge führen zu Schwingungen im gesamten Bereich des haubenartigen Gebildes, die einem Absetzen von Partikeln entgegenwirken, wodurch die Verbackungen vermieden werden können. Dies ist auch deswegen möglich, da sich das haubenartige Gebilde bereits ausgehend vom Boden nach oben erstreckt.

Die erhöhte Filterleistung in Verbindung mit dem kontinuierlichen Ablösen der Gutteilchen von der Innenwand des haubenartigen Gebildes führt dazu, dass überhaupt keine Schichten aus zusammengebackenen Gutteilchen an der Innenwand gebildet werden, so dass das ganze Gut mit sehr gutem Ergebnis behandelt werden kann.

Im Gegensatz zum eingangs erwähnten Stand der Technik sollen keine gezielten Anbackungen erzeugt werden, sondern durch die Faltungen eine Verteilung der zurückgehaltenen Teilchen auf eine stark vergrößerte Fläche erzielt werden, gefolgt von einem alsbalden Ablösen durch die Bewegungen des textilen Gewebes, insbesondere im Flächenbereich zwischen den einzelnen Faltungen.

Es ist anzumerken, dass die Faltungen nicht nur in dem oberen Bereich des haubenartigen Gebildes angeordnet werden können, sondern diese sich vom Boden beginnend nach oben hin kontinuierlich immer stärker konturieren können, wodurch eine extrem hohe Filterleistung geschaffen wird.

In einer weiteren Ausgestaltung der Erfindung sind die Faltungen in Art eines Faltenfilters ausgebildet.

Diese Maßnahme hat den Vorteil, dass besonders effektiv in einem relativ kleinen Raum eine hohe Rückhalteleistung erzielt werden kann. Das haubenartige Gebilde aus dem flexiblen textilen Material erfüllt ja zwei Aufgaben, nämlich zum einen als Produktbehälter und Begrenzung der Prozesskammer über dem Boden und zum anderen als Filter bzw. als Produktrückhaltevorrichtung. Das Material ist vorzugsweise antistatisch und elektrostatisch leitfähig.

In einer weiteren Ausgestaltung der Erfindung weist das haubenartige Gebilde die Grundform eines sich konisch erweiternden Schlauches auf, dessen eines Ende sich um den Rand des Bodens herum erstreckt, und dessen konisch aufgeweiterter Bereich durch Längsfaltungen gefaltet ist, und das am oberen Ende durch einen den Faltungen entsprechenden Deckel-abgeschlossen ist.

Diese Maßnahme hat den Vorteil, dass auf einfache und auch kostengünstige Weise das haubenartige Gebilde dargestellt werden kann, das eine extrem hohe Filterleistung zeigt und gleichzeitig einen vollständigen Abschluss der Prozesskammer realisieren lässt.

Das untere Ende wird um den meist kreisförmigen Boden angeordnet und dort befestigt, so dass in diesem Bereich der runde Boden zylindrisch von dem haubenartigen Gebilde umgeben ist.

Durch entsprechende Faltungen, die sich vom Boden beginnend nach oben hin kontinuierlich immer stärker konturieren, ist der obere Endbereich des haubenartigen Gebildes als eine Art Faltenfilter ausgebildet, der abströmseitig durch einen Deckel abgeschlossen ist, so dass insgesamt sich dadurch das haubenartige Gebilde ergibt, das sich über dem Boden erhebt.

Durch entsprechende Ausgestaltung der Konizität, der Anzahl und der Anordnung der Faltungen können zahlreiche geometrische Ausgestaltungen des haubenartigen Gebildes entstehen. Zum Beispiel kann der erweiterte Schlauch so gefaltet sein, dass sich äußere stehende zylindrische Faltlinien gefolgt von inneren nach radial innen geneigten Faltlinien ergeben. Insbesondere am oberen Endbereich des haubenartigen Gebildes steht eine sternförmige Struktur des Querschnitts desselben mit einer sehr großen Filterfläche zur Verfügung. in einer weiteren Ausgestaltung der Erfindung ist das haubenartige Gebilde von einem Gestell getragen.

Diese Maßnahme hat den Vorteil, dass dem flexiblen haubenartige Gebilde durch das Gestell eine gewisse geometrische Struktur verliehen werden kann, das auch die Handhabung beispielsweise bei der Montage, Demontage oder bei der Reinigung erleichtert.

In einer weiteren Ausgestaltung der Erfindung weist das Gestell mehrere umfänglich verteilte, hochstehende Stangen auf, auf denen das Gewebe aufliegt.

Diese Maßnahme hat den erheblichen Vorteil, dass durch ein solches Gestell das flexible textile Gewebe in einer bestimmten groben geometrischen Ausrichtung gehalten werden kann, trotzdem zwischen den Stangen einzelne Flächenbereiche vorhanden sind, in denen das Gewebe die pulsierenden oder wabernden Bewegungen durchführen kann und hochgerissene Gutpartikel nicht lange anhaften können.

In einer weiteren Ausgestaltung der Erfindung ist das Gestell mit der Halterung verbunden.

Diese Maßnahme hat den Vorteil, dass das Gestell auch gleichzeitig zur Halterung des haubenartigen Gebildes im. Innern des Gehäuses dient, was wiederum die Handhabung erleichtert.

In einer weiteren Ausgestaltung der Erfindung ist die Halterung derart ausgebildet, dass das haubenartige Gebilde in dem Gehäuse höhenverfahrbar und ggf. aus diesem ausfahrbar ist.

Diese Maßnahme hat den Vorteil, dass die zuvor erwähnte Handhabung sehr erleichtert wird, beispielsweise kann das haubenartige Gebilde zum Reinigen oder zum Wechseln vollständig aus dem Gehäuse ausgefahren werden. Wird beispielsweise gewünscht, ein Gewebe mit einer anderen Maschenweite oder sonstigen anderen Eigenschaften einzusetzen, kann dies einfach von dem Gestell abgenommen werden und durch ein anderes Gewebe ersetzt werden. Man kann damit flexibel auf unterschiedliche Eigenschaften von Gutteilchen reagieren, beispielsweise auf die Partikelgröße des Gutes, d.h. die Maschenweite des entsprechend auszuwählenden Gewebes oder dessen Eigenschaften, sich elektrostatisch aufzuladen und anzuhaften, so dass Gewebe mit mehr oder weniger wabernden Eigenschaften ausgewählt werden können, um diese jeweils optimal auf das Gut anzupassen.

In einer weiteren Ausgestaltung der Erfindung ist die Halterung federnd ausgebildet.

Diese Maßnahme hat den Vorteil, dass ganz gezielt gewünschte Druckluftstöße, um die anhaftenden Gutteilchen zusätzlich abzulösen, abgefedert werden können. Durch die Federung ist auch ein Straffen des sich über dem Boden erhebenden Gewebes sichergestellt.

In einer weiteren Ausgestaltung der Erfindung sind an der Innenseite des Gehäuses der Vorrichtung Stabilisierungselemente angeordnet, die um die Außenseite des haubenartigen Gebildes angeordnet sind.

Diese Maßnahme hat den Vorteil, dass diese Stabilisierungselemente nun von der Außenseite des haubenartigen Gebildes her stabilisierend auf dieses einwirken können. Diese Stabilisierungselemente können verhindern, dass das haubenartige Gebilde unerwünscht weit aufbläht, beispielsweise bei Verpuffungen oder unerwünschten Druckstößen in der Prozesskammer.

In einer weiteren Ausgestaltung der Erfindung sind die Stabilisierungselemente als stangenartige Traversen ausgebildet.

Diese Maßnahme hat den Vorteil, dass diese stangenartigen Traversen zwischen diesen ausreichende Bereiche freilassen, um die gewünschten Bewegungen des Gewebes zu ermöglichen. Die äußeren Stangen können die Faltlinien der nach innen gerichteten Faltlinien begrenzen bzw. bestimmen. In Zusammenwirken mit den hochstehenden Stangen des inneren Gestells ist eine gewünschte geometrische Ausrichtung der Faltungen des Gewebes zu erzielen, wodurch Zufälligkeiten der Formgebung des Gewebes ausgeschlossen werden können.

In einer weiteren Ausgestaltung der Erfindung weisen die Stabilisierungselemente Düsen auf, über die die Außenseite des haubenartigen Gebildes mit Blasluft beaufschlagbar ist.

Diese Maßnahme hat den Vorteil, dass diese Stabilisierungselemente zu periodischem Aus- oder Abblasen des Gewebes herangezogen werden können, beispielsweise durch entsprechende Druckluftstöße, wobei diese dann zu Bewegungen und Schwingungen des Gewebes führen, durch die anhaftende Gutteilchen abgelöst und wieder dem verwirbelten Gutkörper rückgeführt werden.

In einer weiteren Ausgestaltung der Erfindung sind die Stabilisierungselemente als Hohlrohre zum Zuführen der Blasluft ausgebildet.

Diese Maßnahme hat den Vorteil, dass durch diese Ausgestaltung der Stabilisierungselemente mehrere Funktionen erfüllt werden können, nämlich sowohl die Stabilisierung als auch die Zuführung der Blasluft.

In einer weiteren Ausgestaltung der Erfindung sind die Hohlrohre über Ventile mit einer Blasluftquelle verbunden.

Diese Maßnahme hat den Vorteil, dass über die Ventile die Taktzeiten und die Intensität der Rückspülung mit Blasluft gesteuert werden können. Hierzu kann beispielsweise ein Teil der zugeführten Prozessluft abgezweigt und über die Ventile zugeführt werden. Es ist dann nur noch notwendig, die Ventile, ggf. ebenfalls mit zur Verfügung stehender Luft, zu öffnen oder zu schließen, um dann kurzfristig abgezweigte Prozessluft als Blasluft zuzuführen.

In einer weiteren Ausgestaltung der Erfindung ist der Boden aus mehreren sich überlappenden ringförmigen Luftleitblechen aufgebaut, zwischen denen Ringspalte ausgebildet sind, wobei die Anordnung derart ist, dass eine sich radial nach außen gerichtete, zunächst horizontale Strömung der durchtretenden Prozessluft ausbildet.

Diese Maßnahme hat sich in Zusammenwirkung mit dem haubenartigen Gebilde als vorteilhaft im Hinblick auf besonders kritischem Gut gezeigt.

In einer weiteren Ausgestaltung der Erfindung steht mittig im Boden eine um 360° sprühende Ringspaltdüse.

Diese Maßnahme, die eine Art Unterbettsprühung darstellt, hat den Vorteil, dass relativ wenig Sprühgut überhaupt an die Innenseite des haubenartigen Gebildes treten kann. Die durch den Boden eintretende Prozessluft verteilt das klebrige Sprühgut nämlich alsbald in dem schwebenden, rotierenden Gutring.

In einer weiteren Ausgestaltung der Erfindung ist das haubenartige Gebilde elektrostatisch leitend ausgebildet.

Diese Maßnahme hat den Vorteil, dass elektrostatische Ladungen, die von Gutteilchen getragen werden, abgeleitet werden können, so dass elektrostatische Effekte, die das Zusammenbacken von Gutteilchen fördern, ebenfalls stark vermindert werden können.

In einer weiteren Ausgestaltung der Erfindung wird das haubenartige Gebilde durch einen Vibrator vibriert. Diese Maßnahme hat den Vorteil, dass die Vibrationen einem Anhaften von Gutteilchen weiter entgegenwirken. Der Vibrator kann beispielsweise im Bereich des Deckels des Gestells oder im Bereich der Halterung des haubenartigen Gebildes angeordnet sein. Der Vibrator kann elektrisch oder pneumatisch betrieben werden und er kann so betrieben sein, dass das haubenartige Gebilde beispielsweise kontinuierlich während der Prozessführung vibriert wird.

Es versteht sich, dass die vorstehend genannten und die nachstehend noch zu erläuternden Merkmale nicht nur in den angegebenen Kombinationen, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: stark schematisiert einen Längsschnitt durch eine erfindungsgemäße Vor- richtung zur Erläuterung des Grundprinzips der Erfindung,
- Fig. 2: eine perspektivische Darstellung eines haubenartigen Gebildes,
- Fig. 3: eine perspektivische Darstellung eines Gestells, auf dem ein haubenartiges Gebilde aus einem flexiblen textilen Gewebe montiert ist,
- Fig. 4: stark schematisiert einen Längsschnitt eines weiteren Ausführungsbei- spiels einer Vorrichtung, wobei an der Innenseite Stabilisierungselemente dargestellt sind,
- Fig. 5: einen der Darstellung von Fig. 4 entsprechenden Schnitt, wobei der Zu- sammenbau von Fig. 3 gerade von unten in das Gehäuse eingezogen wird,
- Fig. 6: einen Längsschnitt der Vorrichtung im endmontierten Zustand und im Betrieb,
- Fig. 7: einen Schnitt längs der Linie VII-VII in Fig. 6, und
- Fig. 8: einen Schnitt längs der Linie VIII-VIII in Fig. 6.

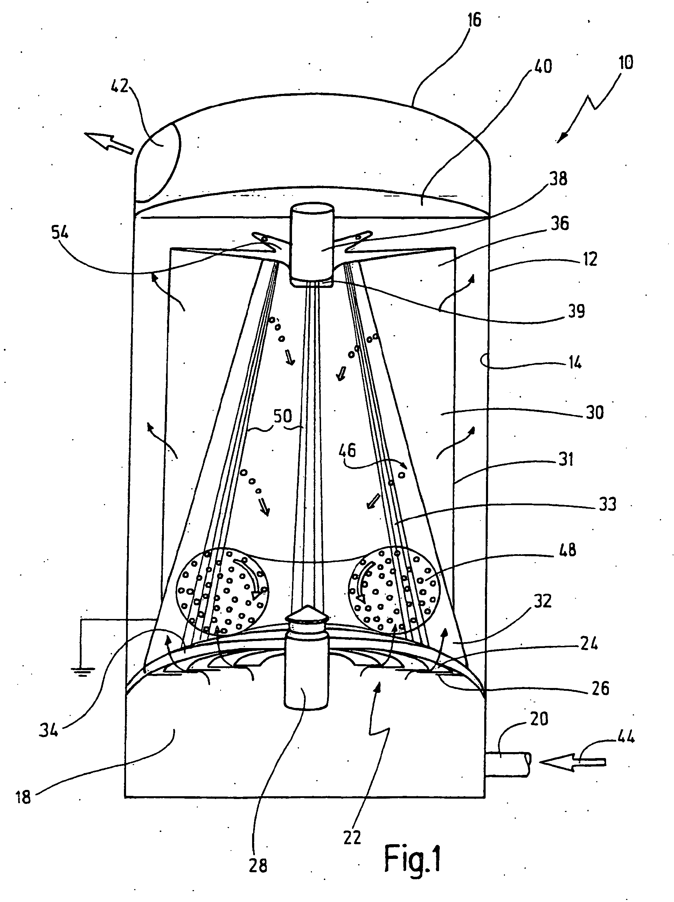

In Fig. 1 ist ein erstes Ausführungsbeispiel einer erfindungsgemäßen Vorrichtung dargestellt, die in ihrer Gesamtheit mit der Bezugsziffer 10 bezeichnet ist.

Die Vorrichtung 10 weist ein Gehäuse 12 auf, das im Wesentlichen aus einer stehenden zylindrischen Wand 14 aufgebaut ist. Am oberen Ende ist das Gehäuse 12 durch einen Deckel 16 verschlossen.

Am unteren Endbereich ist ein Windhaus 18 angeordnet, das mit einem Einlass 20 verbunden ist. Ein oberer Abschluss des Windhauses 18 bildet einen Boden 22, der aus mehreren übereinandergelegten, sich teilweise überlappenden ringförmigen Luftleitblechen 24 zusammengesetzt ist.

Zwischen den Luftleitblechen 24 sind umfängliche Ringspalte 26 ausgebildet.

Die Luftleitbleche 24 sind so angeordnet, dass ein mittiges Luftleitblech 24 am höchsten liegt. In diesem ist mittig eine Düse 28 angeordnet.

Die Düse 28 ist als stehende um 360° sprühende Ringspaltdüse ausgebildet, die mehrere Ringspalte aufweist, über die Behandlungsmedien in Form einer hier nicht dargestellten Sprühflade 29 ausgesprüht werden.

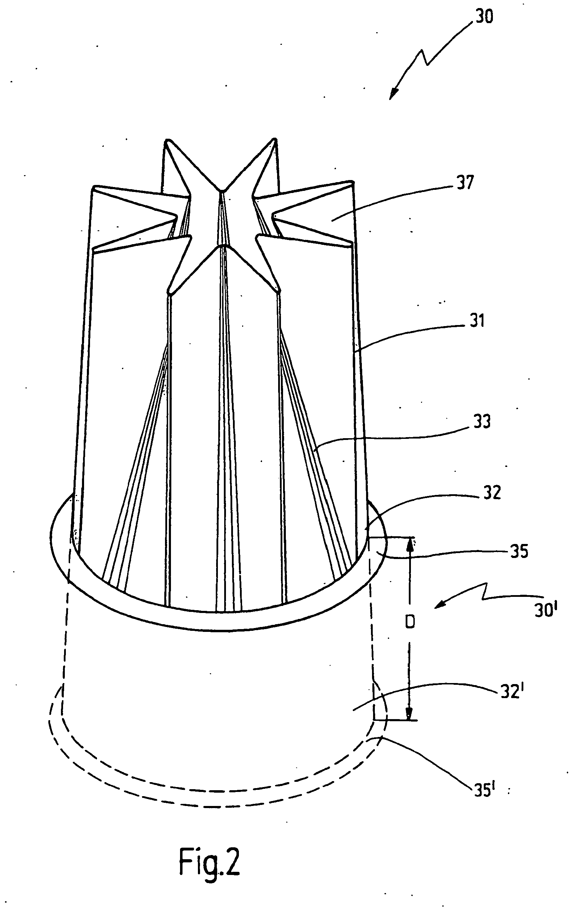

Über dem Boden 22 erhebt sich ein haubenartiges Gebilde 30 aus einem hochfesten, elektrostatisch leitfähigen Textilgewebe. Diese elektrostatisch leitende Eigenschaft ist durch das Erdungssymbol angezeigt. Das haubenartige Gebilde 30 weist Faltungen 31, 33 auf, die später näher noch in Zusammenhang mit Fig. 2 beschrieben werden.

Ein unteres Ende 32 des haubenartigen Gebildes 30 ist fest und dicht mit einem umfänglichen Rand 34 des Bodens 22 verbunden.

Ein oberes Ende 36 des haubenartigen Gebildes 30, das mit einem Deckel 54 bedeckt ist, ist mit einer Halterung 38 verbunden. Die Halterung 38 ist an einer etwa ringförmigen Abluftführung 40 angebracht.

Der Deckel 16 des Gehäuses 12 ist mit einem Auslass 42 verbunden.

Im Betrieb wird über den Einlass 20 Prozessluft 44 dem Windhaus 1.8 zugeführt. Aus dem Windhaus 18 tritt die Prozessluft 44 über die Ringspalte 26 zwischen den Luftleitblechen 24 durch den Boden 22 hindurch und tritt in den Innenraum des haubenartigen Gebildes 30 mit einer zunächst im Wesentlichen horizontal gerichteten Bewegungskomponente ein. Dieser Innenraum stellt die Prozesskammer 50 der Vorrichtung 10 dar.

Die Prozessluft 44 kann durch das haubenartige Gebilde 30 hindurchtreten. Dieses Gebilde 30 ist somit aerotransparent, d.h. die Maschenweite des Gewebes ist so ausgewählt, dass die Prozessluft 44 durch das Gewebe hindurchtreten kann, von der Prozessluft mitgerissene Gutteilchen jedoch zurückgehalten werden. Das heißt, das haubenartige Gebilde 30 dient nicht nur als Wand bzw. Gehäuse der Prozesskammer 50, sondern zugleich als Filter. Die durch das haubenartige Gebilde 30 hindurchgetretene Prozessluft strömt durch die Abluftführung 40 in den Deckel 16 und tritt über den Auslass 42 aus der Vorrichtung 10 wieder aus.

Die an der Innenseite des haubenartigen Gebildes 30 zurückgehaltenen Gutteilchen 46 fallen von der Innenseite des Gewebes wieder ab, wie das durch Pfeile angedeutet ist, und fallen zurück in Richtung Boden 22.

Über dem Boden 22 schwebt ein etwa toroidal rotierender Ring 48 aus Gut 46. Das Luftpolster wird durch den Boden 22 hindurchtretende mit der horizontalen Bewegungskomponente ausgestatteten Prozessluft 44 bereitgestellt. Der toroidale Ring 48 schwebt und rotiert in etwa um die mittige stehende Düse 28. Wie aus der Darstellung von Fig. 1 ersichtlich, rotiert der Ring 48 nicht in einer exakt konzentrischen Ausrichtung zur Düse 28, er stellt ja nur ein mehr oder weniger abgeschlossenes Gebilde dar. Das bedeutet, die Masse an verwirbeltem Gut 46, die in großen Anlagen 100 kg und mehr betragen kann, stößt gegen die Innenseite des Gewebes des haubenartigen Gebildes 30, wodurch Ausbauchungen entstehen können, die hier der Übersicht halber nicht dargestellt sind. Dies verursacht eine Art wabernde Bewegung des haubenartigen Gebildes 30, die ein Ablösen der an der Innenseite zurückgehaltenen Gutteilchen 46 fördert. Die durch die unzähligen Maschen hindurchtretende Prozessluft 44 verhindert ebenfalls, dass sich in größeren Flächenbereichen Ansammlungen von Gutteilchen 46 ausbilden, die dann möglicherweise mit dem von der Düse 28 versprühten Behandlungsgut zu größeren Gebilden verbacken. Neigt das Gut 46 dazu, sich elektrostatisch aufzuladen, wird diese Ladung an das haubenartige Gebilde 30 übertragen, diese elektrostatische Ladung wird aber abgeleitet, beispielsweise dadurch, dass das Gewebe entsprechend elektrostatisch leitend ausgebildet wird oder andere elektrostatisch ableitende Maßnahmen ergriffen werden.

Insgesamt gesehen führt diese Ausbildung dazu, dass die ausgefilterten Gutteilchen 46 nicht lange an der Innenseite des haubenartigen Gebildes 30 haften, sondern alsbald wieder abfallen und der rotierenden Gutmasse zurückgeführt werden, was letztendlich dann zu einem gleichmäßigen Behandlungsergebnis führt. Es kann nicht nur ein sehr gleichmäßiges Behandlungsergebnis erzielt werden, d.h. dass im Schnitt gesehen alle Gutteilchen gleichartig behandelt werden, sei es getrocknet, granuliert oder gecoatet, sondern dass dies auch noch mit einer sehr hohen Ausbeute erfolgt, d.h. dass wenige Gutteilchen durch Anhaften an der Wand dem eigentlichen Behandlungsprozess entzogen bleiben.

Aus der Darstellung in Fig. 1 ist es ersichtlich, dass das haubenartige Gebilde 30 in einem gewissen Abstand zur zylindrischen Wand 14 angeordnet ist. Dies schafft nicht nur um das haubenartige Gebilde 30 herum einen Ringraum, über den die durchgetretene Prozessluft abströmen kann, dieser Ringraum stellt auch eine Art Sicherheitszone bei Verpuffungen oder stoßartigen Luftbewegungen in der Prozesskammer 50 dar. Dies deswegen, weil das haubenartige Gebilde 30 solchen stoßartigen Bewegungen oder Verpuffungen durch seitliches Ausweichen oder Ausbauchen ausweichen kann. Es ist ja zu bedenken, dass die Behandlung meist mit erhöhter Temperatur stattfindet und insbesondere beim Granulieren leicht flüchtige Lösemittel durch die Düse 28 mit versprüht werden, die infolge elektrostatischer Spontanentladungen zu solchen Verpuffungen neigen können.

Im Bereich der Halterung 38 ist zusätzlich noch ein Vibrator 39 angeordnet. Dieser Vibrator kann elektrisch oder pneumatisch betrieben werden und setzt das haubenartige Gebilde 30 in vibrierende Schwingungen. Diese Schwingungen setzen das Gewebe des haubenartigen Gebildes 30 andauernd in Schwingungen und an die Innenseite auftreffende Teilchen haften nicht an, sondern werden wieder abgelöst und fallen dem Prozessgeschehen zurück.

In Fig. 2 ist das haubenartige Gebilde 30 dargestellt.

Aus dieser Darstellung geht hervor, dass das haubenartige Gebilde 30 mit Faltungen 31, 33 versehen ist. Dabei existieren radial äußere Faltungen 31, deren Faltlinien sich in vertikaler Ausrichtung erstrecken. Die inneren Faltungen 33 sind dagegen nach innen geneigt.

Das untere Ende 32 des haubenartigen Gebildes 30 weist einen radial vorspringenden Rand 35 auf, der als Ring ausgebildet ist. Der Rand 35 des hauben artigen Gebildes 30 ermöglicht eine genaue Anpassung des Gebildes 30 an den umfänglichen Rand 34 des Bodens 22, so dass das haubenartige Gebilde 30 fest und dicht mit dem umfänglichen Rand 34 des Bodens 22 verbunden ist.

Die Faltungen 31, 33 erstrecken sich beginnend von dem Rand 35 nach oben hin, d.h. in einem in Fig. 1 dargestellten eingebauten Zustand von dem Boden 22 der Vorrichtung 10. Die nach innen geneigten Faltungen 33 kontinuieren sich nach oben hin immer stärker, wie es insbesondere aus der Darstellung in Fig. 2 hervorgeht. Dadurch ist das haubenartige Gebilde 30 als eine Art Faltenfilter 37 ausgebildet.

Ein haubenartiges Gebilde 30', das ebenfalls in Fig. 2 dargestellt ist, weist am unteren Ende 32' ebenfalls einen radial vorspringenden Rand 35' auf, der als Ring ausgebildet ist und ebenfalls die genaue Anpassung des haubenartigen Gebildes 30' an den umfänglichen Rand 34 des Bodens 22 ermöglicht. Im Unterschied zu dem haubenartigen Gebilde 30 weist das Gebilde 30' einen etwa zylindrischen Abschnitt D auf, der sich beginnend von dem Rand 35' nach oben erstreckt.

Im Unterschied zu dem haubenartigen Gebilde 30 erstrecken sich die Faltungen 31, 33 des haubenartigen Gebildes 30' beginnend von dem Ende des etwa zylindrischen Abschnitts D nach oben hin.

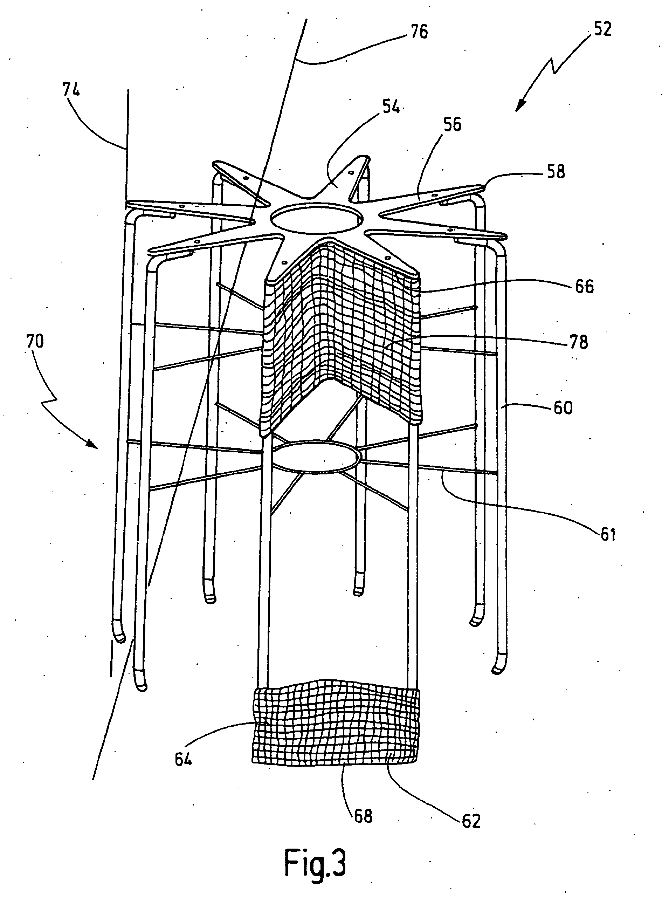

In den Fig. 3 bis 8 ist ein weiteres Ausführungsbeispiel einer erfindungsgemäßen Vorrichtung 80 dargestellt.

In Fig. 3 ist zunächst ein Bauteil der Vorrichtung 80 beschrieben, das den Aufbau des haubenartigen Gebildes erläutert.

In Fig. 3 ist ein Gestell 52 dargestellt, das am oberen Ende den Deckel 54 aufweist, der aus einem flachen Sternkörper 56 besteht, der acht sternförmige Zacken 58 aufweist. Am äußeren Endbereich jeder Zacke 58 ist eine Stange 60 angebracht, die sich vom Deckel 54 aus gesehen nach unten geradlinig weg erstreckt. Die Stangen 60 erstrecken sich längs Mantellinien eines Zylinders, der dem Hüllkreis des Sternkörpers 56 entspricht.

Radiale Streben 61 halten die Stangen 60 in der in Fig. 3 dargestellten Ausrichtung. Um die Außenseite des Gestells 52 ist ein Gewebe 62 aus einem hochfesten, elektrostatisch leitfähigen Material gelegt.

Das Gewebe 62 kann aus einem textilen Material, aus Glasfasern oder auch aus metallhaltigen oder rein metallischen Fasern ausgebildet sein. Unter Gewebe 62 im Sinne der vorliegenden Erfindung wird jedes textilartige Gebilde verstanden, das Gewebestruktur aufweist, d.h. eine porige Natur aufweist, durch die gasförmige Medien hindurchströmen können. Es kann ein gewobenes, gewirktes oder vliesartiges Gewebe sein. Im dargestellten Ausführungsbeispiel ist das Gewebe 62 ein gewebtes Gewebe mit Maschen 64 aus einem hochfesten elektrostatisch leitfähigen Kunststoffmaterial. Die Maschenweite der Maschen 64 ist so gewählt, dass, wie zuvor beschrieben, Prozessluft durch das Gewebe 62 hindurchtreten kann, von dieser Prozessluft mitgerissene Gutpartikel jedoch zurückgehalten werden. Das heißt, die Maschenweite richtet sich jeweils nach der Größe der Gutpartikel.

An einem oberen Ende 66 ist das Gewebe 62 mit dem Sternkörper 56 verbunden.

In einer möglichen Ausführung besteht dieser Sternkörper aus einer Kunststoffplatte, über die das textile Gebilde wie eine Kappe übergestülpt wird.

In der dargestellten Ausgestaltung ist der Sternkörper 56 aus Edelstahlblech hergestellt, der in seiner sternförmigen Berandung Nutprofile aufweist, in die die Säume des Gewebes 62 mittels einer Vergussmasse befestigt sind.

Das untere Ende 68 des Gewebes 62 ist in einer etwa zylindrischen Ausrichtung um die Stangen 60 gelegt und das untere Ende 68 überragt etwas die unteren Enden der Stangen 60, damit genügend Material zur Verfügung steht, über das dieses untere Ende 68 mit dem umfänglichen Rand des Bodens, wie das nachfolgend noch erläutert wird, verbunden werden kann.

Durch diese Ausgestaltung des Gestells 52 mit dem Sternkörper 56 entsteht ein haubenartiges Gebilde 70, das in Art eines Faltenfilters 62 ausgebildet ist. Dabei existieren ebenfalls, wie bei dem haubenartigen Gebilde 30, radial äußere Faltungen 74, deren Faltlinien sich in vertikaler Ausrichtung, sprich entlang von Mantellinien, erstrecken, wie das in Fig. 3 durch die Faltung 74 angedeutet ist. Die nächste innere Faltung 76 ist nach innen geneigt und die Faltlinie entspricht einer Verbindungslinie zwischen dem inneren Einschnitt zwischen zwei Zacken 58 und der Mitte der kreisförmigen umfänglichen Verbindungslinie von zwei benachbarten Stangen 60, wie das in Fig. 3 durch die Linien 76 angedeutet ist.

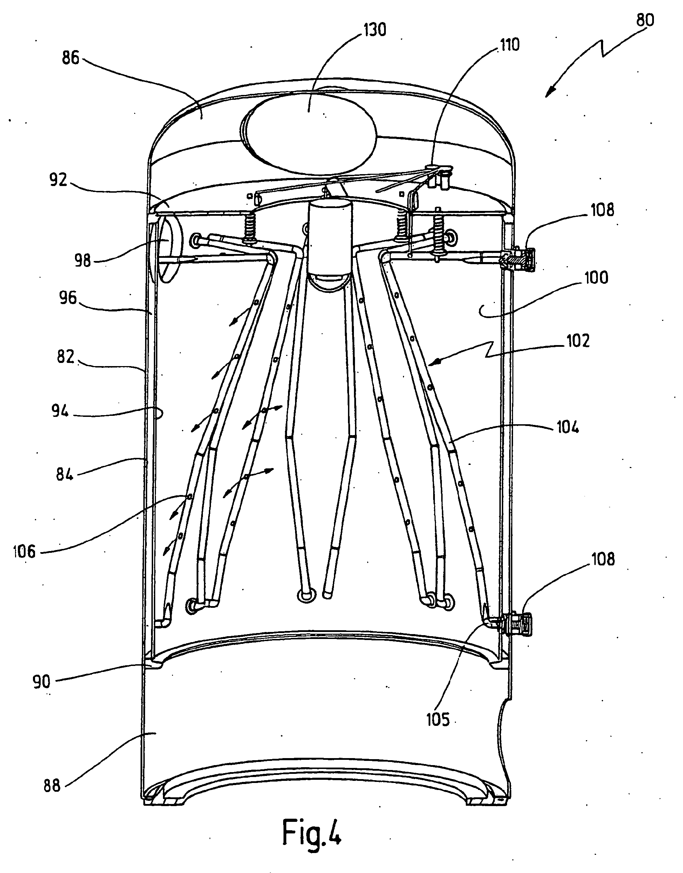

In Fig. 4 ist ein Längsschnitt durch ein Gehäuse 82 der Vorrichtung 80 dargestellt. Daraus ist ersichtlich, dass auch hier das Gehäuse 82 eine stehend zylindrische Wand 84 aufweist, die am oberen Ende durch einen Deckel 86 abgeschlossen ist, am unteren Ende ist das Windhaus 88 angeordnet.

Von einem von der Innenseite der Wand 84 vorstehenden Lager 90 bis zu einem oberen Abluftführungsring 92 ist radial nach innen zur Wand 84 für den Boden beabstandet eine Doppelwand 94 vorgesehen, durch die eine Ringkammer 96 gebildet wird. Die Ringkammer 96 ist mit einem Einlass 98 verbunden.

Von einer Innenseite 100 der Doppelwand 94 stehen umfänglich verteilt zahlreiche Stabilisierungselemente 102 vor.

Die Stabilisierungselemente 102 sind als stangenförmige Traversen 104 ausgebildet, die radial in den Innenraum geneigt sind, wobei die Neigung in etwa der in Fig. 3 dargestellten inneren Faltung 76 entspricht.

Die stangenförmigen Traversen 104 sind als Hohlrohre 105 ausgebildet und sind über die Außenseite mit Ventilen 108 verbunden. Jedes Hohlrohr 105 weist zahlreiche Düsen 106 auf, über die Blasluft austreten kann, wie das in der Fig. 4 auf der linken Hälfte durch Pfeile angedeutet ist. Diese Blasluft trifft, wie das nachfolgend noch erläutert wird, auf die Außenseite des Gewebes 62. Bei einer stoßartigen Beaufschlagung führt dies zu entsprechenden Druckstößen und Bewegungen des Gewebes 62, wodurch an diesem anhaftende Gutteilchen abgeschüttelt werden. Die Hohlrohre 105 bzw. die Düsen 106 werden über der Ringkammer 96 hinzugeführten Blasluft versorgt. Diese Blasluft kann abgezweigte Prozessluft sein.

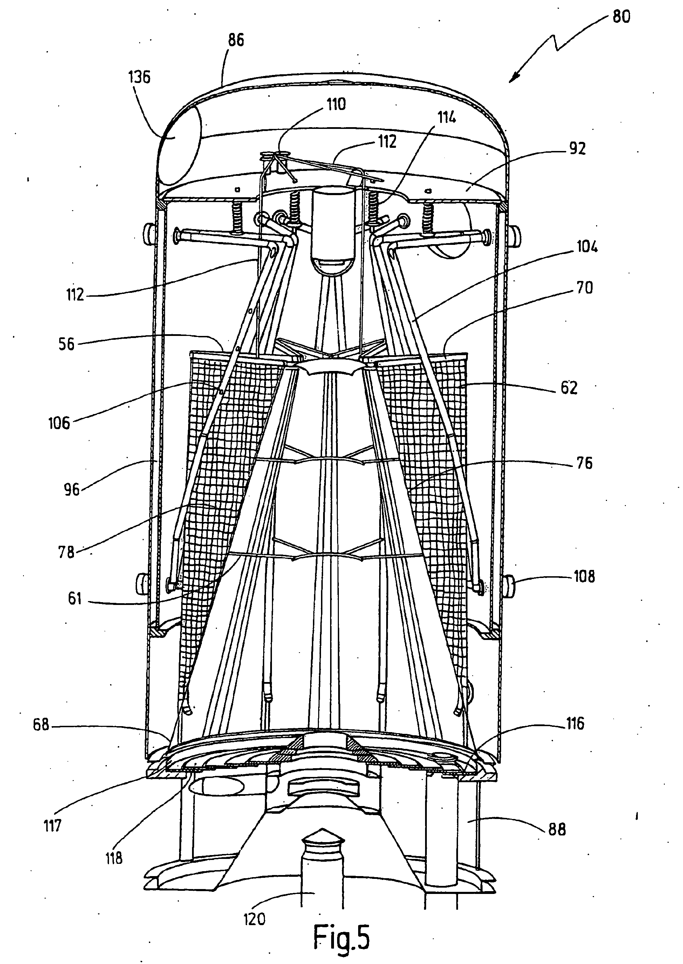

Die Ventile 108 sind so ausgebildet, dass diese einen federbelasteten Kolben aufweisen, der so steuerbar ist, dass er kurzfristig zur Erzeugung eines Blasluftstoßes gegen die Kraft der Feder bewegt wird, wodurch Blasluft aus der Ringkammer 96 in die Hohlrohre 105 eintreten, und durch die Düsen 106 austreten kann. Am Abluftführungsring 92 ist eine Halterung 110 angeordnet, die, wie das insbesondere aus Fig. 5 ersichtlich ist, mehrere Seilzüge 112 aufweist, die mit der oberen Seite des Sternkörpers 56 verbunden sind.

In Fig. 5 ist eine Situation dargestellt, bei der das in Fig. 3 dargestellte Gebilde 70, also das Gestell 52 mit aufgebrachtem Gewebe 62 über die Seilzüge 112 gerade von unten in das dort offene Gehäuse 82 der Vorrichtung 80 hochgezogen wird.

Am unteren Ende 68 ist das Gewebe 62 wie zuvor beschrieben mit dem äußeren umfänglichen Rand 117 des Bodens 116 verbunden, unterhalb dem das Windhaus 88 angeordnet ist.

Ist das Gestell 52 über die Seilzüge 112 ganz nach oben gezogen, stößt dieses an das untere Ende einer Federung 114, die insgesamt aus mehreren umfänglich verteilt stehenden Federsäulen zusammengesetzt ist.

Der Boden 116 ist aus einer Vielzahl an übereinander angeordneten, sich teilweise überlappenden ringförmigen Luftleitblechen 118 zusammengesetzt. Im mittigen Luftleitblech wird von unten her eine stehende Düse 120 eingeschoben, wie das auch in Fig. 5 ersichtlich ist.

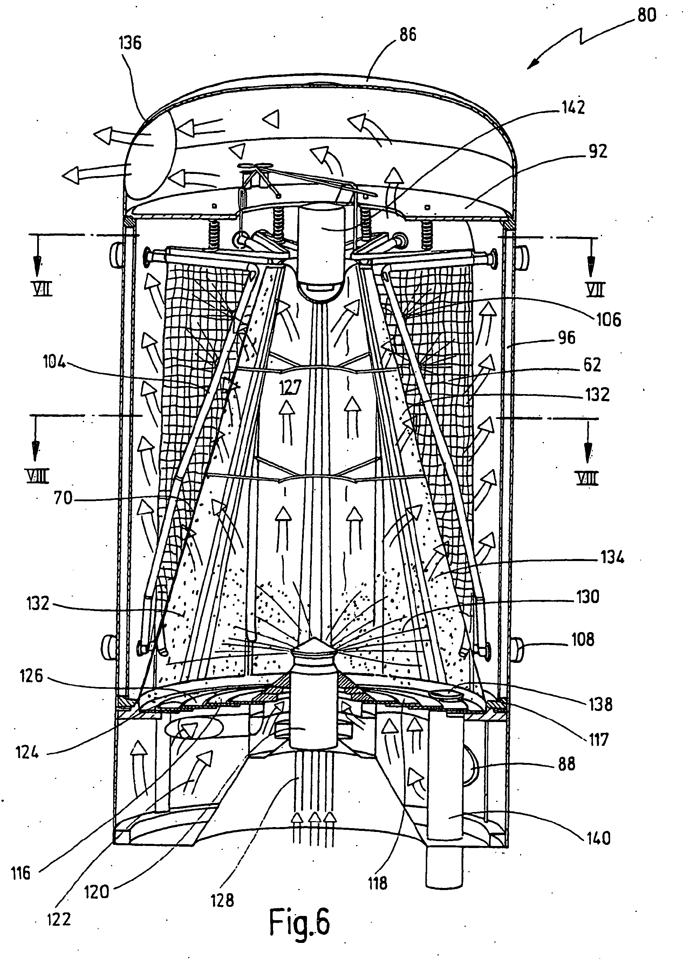

In Fig. 6 ist die Vorrichtung 80 in ihrem endmontierten Zustand und im. Betrieb dargestellt. Prozessluft 122 wird dem Windhaus 88 zugeführt und strömt an die Unterseite des Bodens 116, tritt zwischen den Luftleitblechen 118 hindurch und strömt in den Innenraum des haubenartigen Gebildes 70 mit einer zunächst etwa horizontal gerichteten Bewegungskomponente ein. Dieser Innenraum des haubenartigen Gebildes 70 stellt die Prozesskammer 127 dar. Das auf der Oberseite des Bodens 116 liegende Gut 132 wird durch die durch den Boden 116 hindurchgetretene Prozessluft 122 verwirbelt, wobei sich ein toroidal in sich verwirbelnder und in etwa um die Hochachse der Düse 120 drehender Ring 134 ausbildet.

Die Düse 120 ist als stehende um 360° sprühende Ringspaltdüse ausgebildet, die über mehrere Anschlüsse 128 mit den zu versprühenden Medien versorgt wird. Beim Granulieren wird eine klebrige Flüssigkeit versprüht, wobei entsprechende Sprühluft unterstützend zugeführt wird, um das zu versprühende Medium als feinen Sprühnebel in Form einer etwa horizontal ausgerichteten Sprühflade 130 auszustoßen. Dadurch werden die im toroidalen Ring 134 verwirbelten Gutteilchen gleichmäßig mit dem Sprühmedium beaufschlagt. Prozessluft 122, die durch den toroidalen Ring 134 hindurchgetreten ist, strömt nach oben weiter und tritt über die Maschen des haubenartigen Gebildes 70 durch und strömt in den Raum zwischen der Außenseite des haubenartigen Gebildes 70 und der Innenseite 100 der Doppelwand 94 nach oben in Richtung Abluftführungsring 92 und von dort zum Auslass 136.

Die von der Prozessluft 122 in der Prozesskammer 127 mitgerissenen Gutteilchen werden von dem Gewebe 62 zurückgehalten.

Die an der Innenseite des haubenartigen Gebildes 70 zurückgehaltenen Gutteilchen 132 fallen wieder ab und zurück in das verwirbelte Gut. Dies wird zum einen durch die geneigte Ausrichtung unterstützt, u.a. auch dadurch, dass sowohl die Prozessluft als auch der rotierende Produktring 134 für eine dauernde, stoßartige, ruckartige oder wabernde Bewegung des Gewebes 62 sorgt, was ein Abfallen weiter unterstützt.

Wie zuvor in Zusammenhang mit der Ausgestaltung von Fig, 1 und 2 beschrieben, ist es möglich, das haubenartige Gebilde 70 in Vibrationen zu versetzen, die verhindern, dass sich auf die Innenseite des Gewebes auftreffende Gutteilchen an diesem ansetzen, diese fallen wieder ab und werden dem Prozessgeschehen zurückgeführt. Der entsprechende hier nicht näher dargestellte Vibrator kann beispielsweise am sternförmigen Deckel angebracht sein.

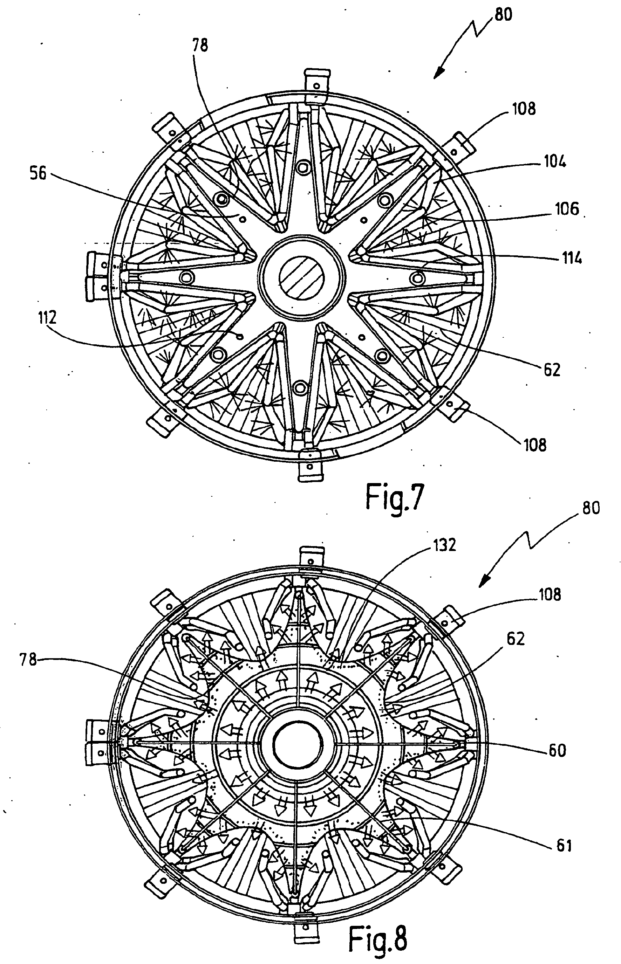

Über die stangenförmigen Traversen 104 wird periodisch stoßartig Blasluft zugeführt, was zusätzlich zu einem Ablösen von anhaftenden Gutteilchen 132 führt, Dies ist insbesondere aus den Schnittdarstellungen von Fig. 7 und 8 ersichtlich.

Aus der Schnittdartellung von Fig. 6 ist ersichtlich, dass die stangenförmigen Traversen 104 sich in etwa entlang der inneren geneigten Faltlinien 76 erstrecken und die seitlich absprühenden Düsen 106 die gesamte Außenseite der Faltungen mit Blasluft beaufschlagen können, so dass besonders effektiv alle anhaftenden Teilchen abgelöst werden können. Allfällige dem Gutteilchen 132 anhaftende elektrostatische Ladung kann an das haubenartige Gebilde 70 abgegeben und von diesem abgeleitet werden, wobei sowohl die Stangen 60 des Gestells 52 als auch die Stangen der stangenförmigen Traversen 104 dazu mit herangezogen werden können. Da die Prozesskammer 127 von außen nicht ersichtlich ist, ist mittig im Abluftführungsring 92 eine Kamera 142 mit einer automatischen Linsen-Reinigungsvorrichtung angeordnet, über die die im Innenraum, also in der Prozesskammer 127, ablaufenden Vorgänge beobachtet werden können, insbesondere auch das Behandlungsergebnis überprüft werden kann.

Ist das gewünschte Behandlungsergebnis erreicht, wird die Zufuhr der Prozessluft 122 gestoppt und das behandelte Gut fällt auf den Boden 116 ab.

Im Boden 116 ist ein Entleerstopfen 138 vorgesehen, der über einen Stößel 140 angehoben werden kann, über den dann das Gut vom Boden abgeführt werden kann.

Über den Entleerstopfen 138 kann auch das zu behandelnde Gut dem Boden zugeführt werden.

Auch bei sehr kritischem Gut, das zu Anbacken und Anhaften an Wänden neigt, kann ein hervorragendes, insbesondere ein gleichmäßiges Behandlungsergebnis erzielt werden und dies auch mit hoher Ausbeute, da die von der Prozessluft 122 durch das Gewebe 62 ausgefilterte Gutteilchen wieder vollständig dem Prozess rückgeführt werden können.

## Patentansprüche

1. Vorrichtung zum Behandeln von partikelförmigem Gut (46, 132), mit einem Gehäuse (12, 82), in dem eine Prozesskammer (50, 127) zum Aufnehmen des zu behandelnden Gutes (46, 132) vorhanden ist, die einen Boden (22, 116) aufweist, durch den Prozessluft (44, 122) in die Prozesskammer (50, 127) einführbar ist, und mit einem haubenartigen Gebilde (30, 70), das sich bis zu einem oberen Endbereich des Gehäuses (12, 82) erstreckt und dort über eine Halterung (38, 110) fixiert ist, wobei das haubenartige Gebilde (30, 70) aus einem flexiblen, textilen Gewebe (62) besteht, das für die Prozessluft (44, 122) durchlässig ist, die zu behandelnden Partikel des Gutes (46, 132) jedoch zurückbehält, und wobei die Prozesskammer (50, 127) im Innenraum des haubenartigen Gebildes (30, 70) ausgebildet ist, **dadurch gekennzeichnet, dass** sich das haubenartige Gebilde (30, 70), ausgehend vom umfänglichen Rand (34, 117) des Bodens (22, 116) und über dem Boden (22, 116) erhebt, und zumindest in seinem oberen Bereich mit Faltungen (31, 33; 74, 76) versehen ist.

2. Vorrichtung nach Anspruch 1, **dadurch gekennzeichnet, dass** die Faltungen (31, 33; 74, 76) in Art eines Faltenfilters (37, 72) ausgebildet sind.

3. Vorrichtung nach Anspruch 1 oder 2, **dadurch gekennzeichnet, dass** das haubenartige Gebilde (70) die Grundform eines sich konisch erweiternden Schlauches aufweist, dessen eines Ende (68) sich um den Rand (117) des Bodens (116) herum erstreckt, und dessen konisch aufgeweiterte Bereich durch Längsfaltungen (74, 76) gefaltet ist und am oberen Ende durch einen den Faltungen (74, 76) entsprechenden Deckel (54) abgeschlossen ist.

4. Vorrichtung nach einem der Ansprüche 1 bis 3, **dadurch gekennzeichnet, dass** das haubenartige Gebilde (70) von einem Gestell (52) getragen ist.

5. Vorrichtung nach Anspruch 4, **dadurch gekennzeichnet, dass** das Gestell (52) mehrere umfänglich verteilte, stehende Stangen (60) aufweist, auf denen das Gewebe (62) aufliegt.

6. Vorrichtung nach Anspruch 4 oder 5, **dadurch gekennzeichnet, dass** das Gestell (52) mit der Halterung (110) verbunden ist.

7. Vorrichtung nach Anspruch 6, **dadurch gekennzeichnet, dass** die Halterung (110) derart ausgebildet ist, dass das haubenartige Gebilde (70) in dem Gehäuse (82) höhenverfahrbar und ggf. aus diesem ausfahrbar ist.

8. Vorrichtung nach einem der Ansprüche 1 bis 7, **dadurch gekennzeichnet, dass** die Halterung (110) federnd ausgebildet ist.

9. Vorrichtung nach einem der Ansprüche 1 bis 8, **dadurch gekennzeichnet, dass** an der Innenseite (100) des Gehäuses (82) Stabilisierungselemente (102) angeordnet sind, die um die Außenseite (78) des haubenartigen Gebildes (70) angeordnet sind.

10. Vorrichtung nach Anspruch 9, **dadurch gekennzeichnet, dass** die Stabilisierungselemente (102) als stangenartige Traversen (104) ausgebildet sind.

11. Vorrichtung nach Anspruch 10, **dadurch gekennzeichnet, dass** sich die Traversen (104) in den Bereich der Faltungen (76) hinein erstrecken.

12. Vorrichtung nach einem der Ansprüche 9 bis 11, **dadurch gekennzeichnet, dass** die Stabilisierungselemente (102) Düsen (106) aufweisen, über die die Außenseite (78) des haubenartigen Gebildes (70) mit Blasluft beaufschlagbar ist.

13. Vorrichtung nach Anspruch 12, **dadurch gekennzeichnet, dass** die Stabilisierungselemente (102) als Hohlrohre (105) zum Zuführen der Blasluft ausgebildet sind.

14. Vorrichtung nach Anspruch 13, **dadurch gekennzeichnet, dass** die Hohlrohre (105) über Ventile (108) mit einer Blasluftquelle verbunden sind.

15. Vorrichtung nach einem der Ansprüche 1 bis 14, **dadurch gekennzeichnet, dass** der Boden (22, 116) aus mehreren, überlappenden, ringförmigen Luftleitblechen (126) aufgebaut ist, zwischen denen Ringspalte (26, 124) ausgebildet sind, wobei die Anordnung derart ist, dass eine sich radial nach außen gerichtete, zunächst im Wesentlichen horizontale Strömung der durchtretenden Prozessluft (44, 122) ausbildet.

16. Vorrichtung nach einem der Ansprüche 1 bis 15, **dadurch gekennzeichnet, dass** mittig im Boden (22, 116) eine um 360° sprühende Ringdüse (28, 120) steht.

17. Vorrichtung nach einem der Ansprüche 1 bis 16, **dadurch gekennzeichnet, dass** das haubenartige Gebilde (30, 70) elektrostatisch leitend ausgebildet ist.

18. Vorrichtung nach einem der Ansprüche 1 bis 17, **dadurch gekennzeichnet, dass** das haubenartige Gebilde (30, 70) durch einen Vibrator (39) vibriert wird.

## Claims

1. Apparatus for treating of a particulate product (46, 132) comprising a housing (12, 82) having a process chamber (50, 127) for receiving the particulate product (46, 132) to be treated, and having a bottom (22, 116) through which process air (44, 122) can be introduced into the process chamber (50, 127), and comprising a dome-like formation (30, 70) extending to an upper area of the housing (12, 82) and being fixed there by a holder (38, 110), wherein the dome-like formation (30, 70) is made of a flexible textile fabric (62) which is permeable for the process air (44, 122), but retains the particles of the product (46, 132) to be treated, and wherein the process chamber (50, 127) is in the inner space of the dome-like formation (30, 70), **characterized in that** the dome-like formation (30, 70) rises from a circumferential rim (34, 170) of the bottom (22, 116) and above the bottom (22, 116), and is provided with foldings (31, 33; 74, 76) at least in its upper section.

2. Apparatus of claim 1, **characterized in that** the foldings (31, 33; 74, 76) are performed like a folded filter (37, 72).

3. Apparatus of claims 1 or 2, **characterized in that** the dome-like formation (30) has the principle shape of a conically expanding hose, one end thereof (68) extends around the rim (117) of the bottom (116), and the conically expanding section is folded via longitudinal folds (74, 76) and is closed at its upper end via a lid (54) corresponding to the foldings (74, 76).

4. Apparatus of anyone of claims 1 through 3, **characterized in that** the dome-like formation (70) is supported by a rack (52).

5. Apparatus of claim 4, **characterized in that** the rack (52) has several circumferentially distributed upstanding rods (60) on which the fabric (62) rests.

6. Apparatus of claims 4 or 5, **characterized in that** the rack (52) is connected with the holder (110).

7. Apparatus of claim 6, **characterized in that** said holder (110) is designed **in that** the dome-like formation (70) can be moved in height within the housing (82) and if necessary, can be moved out of it.

8. Apparatus of anyone of claims 1 through 7, **characterized in that** the holder (110) is designed resiliently.

9. Apparatus of anyone of claims 1 through 8, **characterized in that** stabilizing elements (102) are arranged at the inner side (100) of the housing (82) which are arranged along the outer side (78) of the dome-like formation (70).

10. Apparatus of claim 9, **characterized in that** the stabilizing elements (102) are designed as rod-like crossbeams (104).

11. Apparatus of claim 10, **characterized in that** the crossbeams (104) extend into the area of the foldings (76).

12. Apparatus of anyone of claims 9 through 11, **characterized in that** the stabilizing elements (102) have nozzles (106), which can charge the outer side (78) of the dome-like formation (70) with blowing air.

13. Apparatus of claim 12, **characterized in that** the stabilizing elements (102) are designed as hollow pipes (105) for feeding the blowing air.

14. Apparatus of claim 13, **characterized in that** the hollow pipes (105) are connected via valves (108) with a source of blowing air.

15. Apparatus of anyone of claims 1 through 14, **characterized in that** the bottom (22, 116) is made of several overlapping ring-shaped air guide plates (126) having annular gaps (26, 124) therebetween, wherein the arrangement is **in that** a stream of passing process air (44, 122) is formed which is directed radially outwardly and is initially substantially horizontal.

16. Apparatus of anyone of claims 1 through 15, **characterized in that** a ring nozzle (28, 120) spraying about 360° is arranged centrally in the bottom (22, 116).

17. Apparatus of anyone of claims 1 through 16, **characterized in that** the dome-like formation (30, 70) is electrostatically conductive.

18. Apparatus of anyone of claims 1 through 17, **characterized in that** the dome-like formation (30, 70) is vibrated via a vibrator (39).

## Revendications

1. Dispositif pour traiter un produit (46, 132) sous forme de particules, avec un carter (12, 82), dans lequel est présente une chambre de traitement (50, 127) destinée à recevoir le produit (46, 132) à traiter, qui présente un fond (22, 116) par lequel de l'air de traitement (44, 122) peut être introduit dans la chambre de traitement (50, 127), et avec une structure du genre cloche (30, 70) qui s'étend jusqu'à une région terminale supérieure du carter (12, 82) et y est fixée au moyen d'un support (38, 110), sachant que la structure du genre cloche (30, 70) est constituée d'un tissu textile flexible (62) qui laisse passer l'air de traitement (44, 122) mais qui retient les particules à traiter du produit (46, 132), et sachant que la chambre de traitement (50, 127) est configurée dans l'espace intérieur de la structure du genre cloche (30, 70), **caractérisé en ce que** la structure du genre cloche (30, 70) s'élève en partant du bord périphérique (34, 117) du fond (22, 116) et au-dessus du fond (22, 116), et est pourvue de plis (31, 33 ; 74, 76) au moins dans sa région supérieure.

2. Dispositif selon la revendication 1, **caractérisé en ce que** les plis (31, 33 ; 74, 76) sont réalisés à la manière d'un filtre plissé (37, 72).

3. Dispositif selon la revendication 1 ou 2, **caractérisé en ce que** la structure du genre cloche (70) présente la forme d'une gaine s'élargissant coniquement, dont une extrémité (68) s'étend tout autour du bord (117) du fond (116) et dont la région élargie coniquement est pliée par des plis longitudinaux (74, 76) et est fermée à l'extrémité supérieure par un couvercle (54) correspondant aux plis (74, 76).

4. Dispositif selon l'une des revendications 1 à 3, **caractérisé en ce que** la structure du genre cloche (70) est portée par un bâti (52).

5. Dispositif selon la revendication 4, **caractérisé en ce que** le bâti (52) présente plusieurs barres verticales périphériquement réparties (60), sur lesquelles porte le tissu (62).

6. Dispositif selon la revendication 4 ou 5, **caractérisé en ce que** le bâti (52) est assemblé au support (110).

7. Dispositif selon la revendication 6, **caractérisé en ce que** le support (110) est conçu de telle sorte que la structure du genre cloche (70) peut être déplacée en hauteur dans le carter (82) et peut le cas échéant être sortie de ce dernier.

8. Dispositif selon l'une des revendications 1 à 7, **caractérisé en ce que** le support (110) est conçu à ressort.

9. Dispositif selon l'une des revendications 1 à 8, **caractérisé en ce que** des éléments de stabilisation (102), qui sont disposés autour du côté extérieur (78) de la structure du genre cloche (70), sont disposés sur le côté intérieur (100) du carter (82).

10. Dispositif selon la revendication 9, **caractérisé en ce que** les éléments de stabilisation (102) sont réalisés sous forme de traverses (104) du genre barres.

11. Dispositif selon la revendication 10, **caractérisé en ce que** les traverses (104) s'étendent à l'intérieur de la région des plis (76).

12. Dispositif selon l'une des revendications 9 à 11, **caractérisé en ce que** les éléments de stabilisation (102) présentent des buses (106) au moyen desquelles le côté extérieur (78) de la structure du genre cloche (70) peut être sollicité par de l'air de soufflage.

13. Dispositif selon la revendication 12, **caractérisé en ce que** les éléments de stabilisation (102) sont réalisés sous forme de tubes creux (105) pour apporter l'air de soufflage.

14. Dispositif selon la revendication 13, **caractérisé en ce que** les tubes creux (105) sont reliés par l'intermédiaire de distributeurs (108) à une source d'air de soufflage.

15. Dispositif selon l'une des revendications 1 à 14, **caractérisé en ce que** le fond (22, 116) est constitué de plusieurs tôles de guidage d'air annulaires (126) en chevauchement, entre lesquelles sont formées des fentes annulaires (26, 124), l'agencement étant tel qu'on obtient un flux d'air de traitement traversant (44, 122) dirigé radialement vers l'extérieur, initialement essentiellement horizontal.

16. Dispositif selon l'une des revendications 1 à 15, **caractérisé en ce qu'**une buse annulaire (28, 120) pulvérisant sur 360° est placée centralement dans le fond (22, 116).

17. Dispositif selon l'une des revendications 1 à 16, **caractérisé en ce que** la structure du genre cloche (30, 70) est conçue conductrice de l'électricité statique.

18. Dispositif selon l'une des revendications 1 à 17, **caractérisé en ce que** la structure du genre cloche (30, 70) est mise en vibration par un vibreur (39).
